Europäisches Patentamt

European Patent Office

Office européen des brevets

(19)

(11) Publication number: **0 204 552**

**A2**

(12) **EUROPEAN PATENT APPLICATION**

(21) Application number: 86304247.9

(22) Date of filing: 04.06.86

(51) Int. Cl.⁴: **B 41 M 3/14**

(30) Priority: 05.06.85 GB 8514158

(43) Date of publication of application:
10.12.86 Bulletin 86/50

(84) Designated Contracting States:
CH DE FR GB LI NL SE

(71) Applicant: THOMAS DE LA RUE & COMPANY LIMITED
De La Rue House 3/5 Burlington Gardens
GB-London W1A 1DL(GB)

(72) Inventor: Darmanin, George
83 Ursula Street
Valletta(MT)

(74) Representative: Howick, Nicholas Keith et al,
Carpmaels & Ransford 43 Bloomsbury Square
London WC1A 2RA(GB)

(54) Improvements in and relating to printed documents resistant to counterfeiting.

(57) A printed document includes an area for rendering difficult counterfeit reproduction via a half-tone separation techni-
que. The area has at least one block (4) of non-parallel lines (1),
whereby an interference effect or a distortion is caused in a
copy of the document using the half-tone separation tech-
nique.

FIG. 2.

EP 0 204 552 A2

## IMPROVEMENTS IN AND RELATING TO PRINTED DOCUMENTS
## RESISTANT TO COUNTERFEITING

This invention relates to printed documents, and more particularly to printed security documents, for example, banknotes bearing printed markings which will render difficult the counterfeit reproduction thereof via half-tone separation technique, by reason of a substantial probability that a moire effect and/or a colour distortion will be seen in the illicit copy.

It is known to include, in printed documents, spaced parallel lines which, when attempts at reproduction of the documents are made by the use of conventional half-tone multi-colour separation processes, are likely to give rise to interference patterns, which are dependent upon the relationship between, on the one hand, the colour or colours of the original and the angle of direction of the printed lines and, on the other, the screen rulings and screen angles employed in the unauthorised attempts.

According to the invention, there is provided a printed document including an area for rendering difficult counterfeit reproduction via a half-tone separation technique, which area comprises at least one block of non-parallel lines, whereby an interference effect or a distortion will be caused in a copy of the document using said technique.

The term "block of non-parallel lines" used herein means any set, group, collection or assemblage of non-parallel lines.

Preferably each block comprises diverging lines and spaces, with the widths of the lines and spaces increasing uniformly. The length of the printed lines and unprinted spaces may vary within any given block.

The corresponding dimensions of the printed line and inter-line spaces may be identical or different but preferably the result of the printing is to give an overall uniform tonal effect, when the document is viewed at a normal or average distance, whether the printing is in a single colour or whether the colours graduate from one colour to another in the so-called "rainbow" printing process.  Such overall constant tone printing is often seen in the "background" printing of security documents.

Preferably in the printed area of a block, there is an ink coverage of between 25% and 75% of the paper, with between 35% and 45% preferred.  Conveniently the greatest number of lines is not more than about 8 lines per millimetre at the region of minimum divergence and, at region of maximum divergence, not less than about 4 lines per millimeter.

Preferably, the documents comprise a plurality of adjacent blocks which are substantially identical save perhaps as to the overall sizes and overall shapes of the blocks and the lengths of the constituent lines and, certainly, save as to the general line directions or orientations of many, if not all, of the blocks.  The effective overall orientation of the blocks is preferably such as to embrace all general screen directions.

The blocks may occupy substantially identical or different areas.  When the blocks do not all occupy generally rectangular areas, they may be of such "interlocking" and abutting random "shapes" as are selected for the design and/or security requirements of the document.

The lines of the blocks may be printed by any printing process such as, for example, letter-press, litho (including wet or dry offset), direct-plate (intaglio) even though, in the case of the latter, it will not generally be possible to obtain a consistent overall tonal effect without modifying the image so that the engraved intaglio lines become shallower as they become wider.

Although, in theory, all of the diverging printed lines of any block could originate in a common point, for reasons associated with the problems of printing distinctly as any line tends towards an adjacent line, the greatest possible degree of convergence will normally be limited to the point at which, in practical terms, it is possible to print the separated clearly and distinctly.

Within any of the blocks of lines, a part of the line structure may reasonably be expected to give rise to interference patterns and/or colour changes on attempts at half-tone colour-separation reproduction. The line structure of a printed document according to a preferred embodiment of this invention may be regarded as approximating to a universal anti-counterfeiting measure insofar as "interference-reaction" may be expected when conventional (e.g. 150, 175 or 200 lines per inch) half-tone screen rulings are used by a counterfeiter.

Because of the wide-range of line-directions to be found amongst all of the blocks of lines of a document according to a preferred embodiment of this invention, "interference-reaction" is likely to occur for at least one of these colours at one place or another, in at least one block which has line-directions approximating to the half-tone screen angles employed by the counterfeiter. Commonly, half-tone reproduction may be attempted using, for example, the following screen angles Magenta 15°, 0°, 7.5° and 20° and, correspondingly, Black 45°, 18.4°, 37.5° and 50°, Cyan 75°, 45°, 67.5° and 80° and Yellow 90°, 71.6°, 82.5° and 95°.

Thus, a document preferably includes blocks of diverging lines which are collectively orientated at various angles between 0° and 360°, (or in effective practical terms between 0° and 180°), with the result that "interference-reaction" is likely to arise when counterfeit copies are made by half-tone colour separation plates, provided that the counterfeiter has used half-tone rulings which approximate to the spacing of the diverging lines of the blocks and provided that the counterfeiter has used screen angles which correspond approximately to the line directions of one or more of the printed blocks of lines in the original. The angled blocks of diverging lines preferably include the angles and dimensions which may be expected to be used in the production of half-tone separation plates for the printing of some, and preferably all, of the colour constituents.

Embodiments of this invention will now be described by reference to the accompanying drawings of which:-

Figure 1 is a diagrammatic fragmented and partial view, not to scale and enlarged, of some of the diverging lines and spaces of a block printed upon a document;

Figure 2 is a diagrammatic representation of generally rectangular areas each of which is intended to include a block of diverging lines with the general direction of the lines being different from block to block (some only of the blocks are illustrated); and

Figure 3 is a diagrammatic view of a document and illustrates fragments of a background pattern thereon, the said pattern comprising randomly shaped and interlocking blocks of diverging lines, with the general directions of the lines of the blocks also being different from block to block.

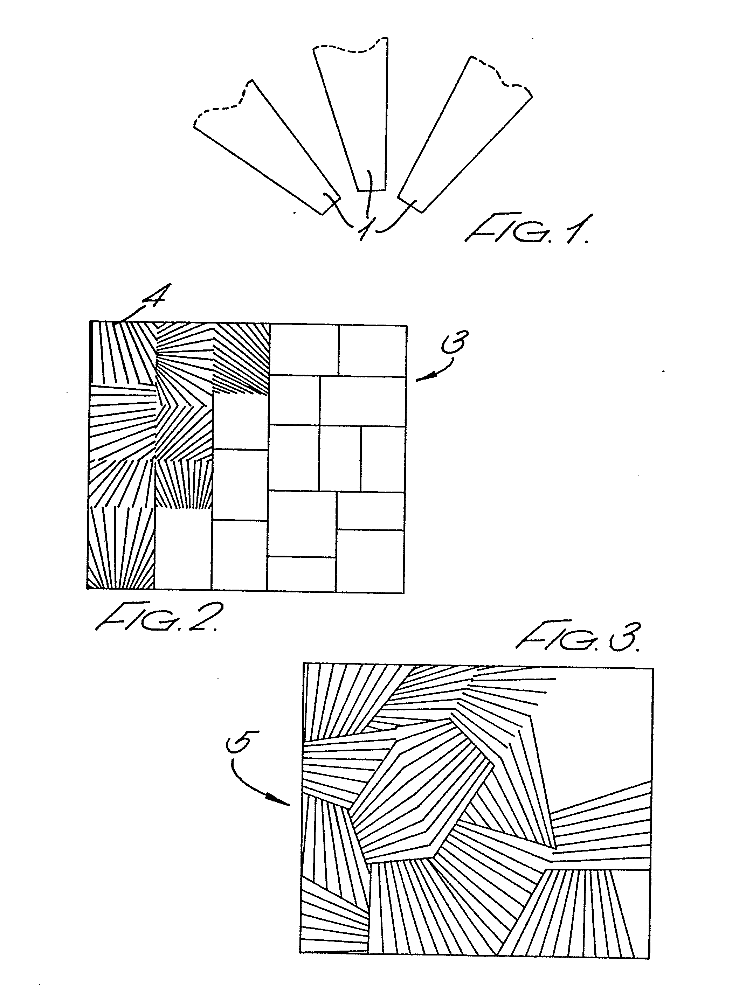

Referring to Figure 1, three printed lines of a block significantly magnified are shown at 1 and the spaces between them are shown at 2. The lines which diverge from a common point and increase in width are printed in a single colour and although the unprinted space 2 between the lines 1 is shown as occupying the same area as that of a line 1, a ːinted line and an
unprinted space may or may not have the same area
provided that, in the actual printed document, the
printed lines and unprinted spac  combine, at an average
viewing distance, to give the impression of a consistent
overall tone.  The lines of the actual document will not
intentionally merge at their closest points and the lines
and intermediate spaces, may terminate at any convenient
point.  The length of lines of this example ranges
between 2mm minimum and 30mm maximum.  As has been
indicated before, the lines 1 may be printed by any
convenient printing process.

In Figure 2, part of a printed document 3 is shown,
the document 3 including several rectangular areas 4
including a block of diverging lines 1 of the type shown
in Figure 1.  The blocks are generally similar, but it
will be seen that the general direction or orientation of
the lines 1 varies from block to block to provide blocks
of lines 1 collectively oriented at various angles
between $0^\circ$ and $360^\circ$ (effectively $0^\circ$ and $180^\circ$) as
mentioned previously.

In Figure 3 is shown part of a further printed
document 5.  The document 5 has a multiplicity of blocks
of lines 1, with the blocks being of differing dimension
and shape.  As with the embodiment of Figure 2, the
orientation of the lines 1 varies from block to block to
provide blocks of lines oriented at various angles
between $0^\circ$ and $360^\circ$ (effectively $0^\circ$ and $180^\circ$).

It will be appreciated that the foregoing
description is by way of example only, and that
variations and modifications may be made within the scope
of the invention.

These embodiments of a printed document according to
the invention have the advantage that, because of the
non-parallel line arrangement, and orientation of the lines, a moire pattern or colour distortion will be produced wherever a copying process is used which involves a half-tone separation technique involving representationof the pattern involved in terms of rows of closely spaced dots, the rows where colours are involved being at different orientations for different colours. The half-tone separation technique may be an intermediate step in a printing process, but provided half-tone separation takes place at some stage, the moire pattern or colour distortion will be introduced into the copy to indicate unauthorised copying.

CLAIMS

1. A printed document including an area for rendering difficult counterfeit reproduction via a half-tone separation technique, which area comprises at least one block (4) of non-parallel lines (1), whereby an interference effect or a distortion will be caused in a copy of the document using said technique.

2. A printed document as claimed in Claim 1 wherein said at least one block (4) comprises a set of diverging lines (1) and spaces (2) between the lines.

3. A printed document as claimed in Claim 2 wherein the widths of the lines (1) increase uniformly along their length.

4. A printed document as claimed in Claim 2 or Claim 3 wherein the widths of the spaces (2) increase uniformly along their length.

5. A printed document as claimed in any one of Claims 2 to 4 wherein the area covered by a particular line (1) is the same as the area of a space (2) adjacent said line (1).

6. A printed document as claimed in any preceding Claim wherein there is an ink coverage in the range 25% to 75% of the area of said at least one block (4).

7. A printed document as claimed in Claim 6 wherein said ink coverage is between 35% and 45% of the area of said at least one block(4).

8. A printed document as claimed in any preceding Claim wherein the maximum line density is 8 lines per millimetre at the region of minimum divergence.

9. A printed document as claimed in any preceding Claim wherein the minimum line density is 4 times per millimetre at the region of maximum divergence.

10. A printed document as claimed in any preceding Claim comprising a plurality of adjacent blocks (4).

11. A printed document as claimed in Claim 10 including blocks (4) of diverging lines collectively orientated at a multiplicity of angles between 0° and 360° relative to a datum line.

12. A printed document as claimed in Claim 11 wherein the angled blocks (4) of diverging lines include angles and dimensions expected to be used in production of half-tone separation plates for the printing of at least some of the colour constituents.

0204552

1/1

FIG. 1.

FIG. 2.

FIG. 3.